# EUROPEAN PATENT SPECIFICATION

(11) **EP 0 718 656 B1**
(45) Date of publication and mention of the grant of the patent: **08.09.1999**
(21) Application number: 94309817.8
(22) Date of filing: 23.12.1994
(51) Int. Cl.: G02B 21/00

(54) **Transmission type confocal laser microscope**
Konfokales Durchlichtlasermikroskop
Microscope à laser confocal à transmission

(43) Date of publication of application: 26.06.1996
(73) Proprietor: KOIKE SEIKI CO., LTD., Minato-ku, Tokyo (JP)
(72) Inventor: Koike, Hiroshi, Tokyo (JP); Suzuki, Shohi, Tokyo (JP)
(74) Representative: Bubb, Antony John Allen

(56) References cited:
- DE-A- 3 804 642
- DE-U- 9 310 307
- US-A- 5 035 476
- PATENT ABSTRACTS OF JAPAN vol. 18 no. 78 (P-1689) ,8 February 1994 & JP-A-05 288992 (LASER TEC KK) 5 November 1993,

## Description

### BACKGROUND OF THE INVENTION

### (a) Field of the Invention

The present invention relates to a laser microscope and in particular to a transmission type confocal laser microscope which forms an image of a transmitted light from a specimen.

### (b) Related Art

Confocal laser microscopes generally scan a laser light spot which is focused to a size of about 1 micron along a specimen. A light having a brightness or darkness in individual positions (points) is detected by a photoelectric transducing sensor. A converted electric signal is integrated for displaying it on an large screen of a monitor display. This type of confocal laser microscopes have an advantage in that defocussed light or spurious light can be eliminated since the specimen is always illuminated in only individual desired positions so that unnecessary spurious light is not mixed with a desired light and since light is received through a pinhole having a size which is substantially equal to that of the specimen scanning spot light in a position which is in a conjugate position for specimen plane. Accordingly, the confocal laser microscopes provide a higher resolution and contrast in comparison with conventional optical microscopes even if same objective lens is used.

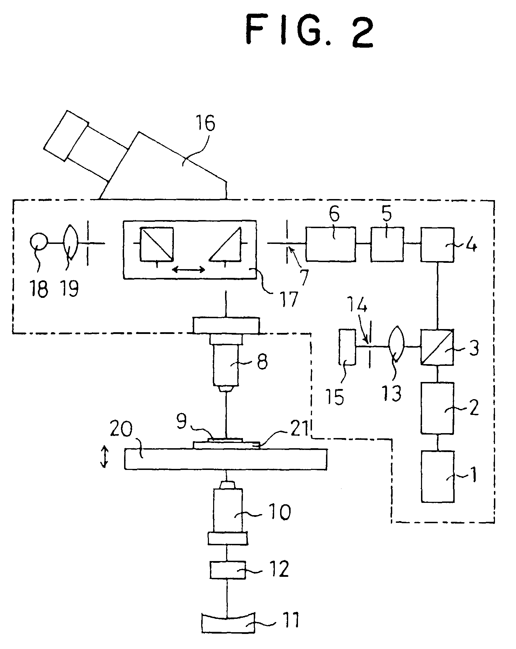

The confocal laser microscopes are classified into two types, i.e. a reflection type laser microscope in which light reflected from a specimen is imaged and a transmission type laser microscope in which light transmitted through a specimen is imaged. Typical structure of the conventional transmission type confocal laser microscope is schematically shown in Fig. 2. This type of laser microscope emits a polarized laser light from a light source 1. The flux of the light is enlarged by an expander 2a and is transmitted through a polarized beam splitter 3 and is scanned in a transverse (X) direction and in a vertical (Y) direction by means of Galvano-mirrors 4 and 5 which are Galvanometers with mirrors. The light is once converged by a relay lens 6 in a position of a field stop (corresponding to an imaging point of an objective lens). The light is transmitted through an illumination side objective lens 8 and is scanned on and along a specimen 9 as a spot.

The laser light which has been transmitted through the specimen 9 is transmitted through a transmission side objective lens 10 which is optically equivalent to the illumination side objective lens 8 and is imaged on the surface of a concave mirror 11. The concave mirror 11 has a reflective mirror surface which is spherical around the pupil position of the transmission side objective lens 10. The light flux which is reflected on the mirror 11 is returned via the same optical path. A 1/4λ wave length plate 12 which changes the polarization direction by 45° is provided between the concave mirror 11 and the transmission side objective lens 10. The reflected laser light is incident upon the above mentioned polarized beam splitter 3. Only the light which was transmitted twice through the 1/4λ wave length plate 12 is reflected and is bent in a normal direction by the splitter 3. The split and bent light is transmitted through a condenser lens 13 and a pin-hole 14 is incident upon a specimen signal detecting sensor 15 comprising light receiving elements. The detected signal is photoelectrically converged into an electric signal and is then fed to a memory.

In the drawings, reference numeral 16 denotes a binocular head; 17 an optical path switch which is used when the binocular head is used; 18 a light source for vertical overhead illumination; and 19 a relay lens for the light source 18.

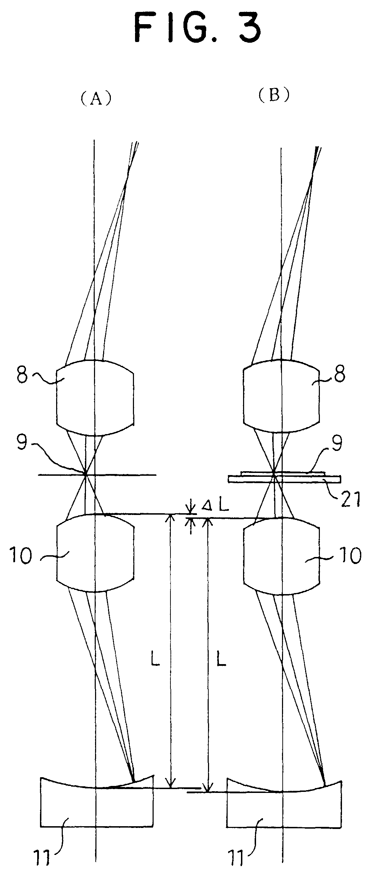

In order to use the conventional type confocal laser microscope, a preparation 21 is firstly placed on a specimen stage 20 as shown in Fig. 3. Light is focussed on the surface of the specimen 9 by the illumination side objective lens 8. It is necessary to shift or displace the transmission side objective lens 10 by a slight length (ΔL) each time when the transmission side objective lens 10 is adjusted since the level of the specimen is different depending upon the thickness of the preparation 21. The thickness of the glass portion of the preparation usually has variations within about ±0.3 mm among the different preparations.

Accordingly, the optical path changer 17 is conventionally switched to move toward an optical microscope unit which is on the side of the binocular head 16. Light from the light source 18 for vertical overhead illumination is focussed on the specimen by adjusting the illumination side objective lens 8. The image of the light reflected from the concave mirror 11 is superposed upon the image of the light reflected from the specimen by adjusting the transmission side objective lens 10. Thereafter, the optical path switch 17 is switched to the laser light side.

Alternatively, the transmission side objective lens 10 is preliminarily adjusted to a position suitable for the preparation having a standard thickness. Focussing is achieved by means of the optical microscope unit including the illumination side objective lens 8. Light is then switched to laser light. The transmission side objective lens 10 is finely adjusted to provide the highest resolution while observing the image on the synthetic monitor.

There is also known, see JP-A-288 992, a transmission type confocal microscope having the features of the preamble of claim 1.

Such known systems have the disadvantage that focussing of the transmission side objective lens is difficult and that accuracy is low so that it is difficult to obtain high resolution in the output image.

It is accordingly an object of the invention to provide an arrangement wherein the ease of focussing and the accuracy of focussing of such prior arrangements is improved.

This object is achieved by a device having the features of the characterising clause of claim 1.

Said objective lens may comprise an objective lens unit which is movable in a direction of an optical axis and a fixed relay lens unit, wherein movement of the objective lens unit for focus adjustment will not cause the optical path after the relay lens unit to be changed.

The optical path on which the transmission side objective lens and fixed relay lens are located may be normal to the optical path on which the optical path switch, the concave mirror and the target are located.

The optical path switch may comprise a pair of reflective prisms which are movable with respect to the optical axis of the transmission side objective lens and the relay lens.

The optical path switch may comprise a reflective mirror which is rotatable around the optical axis of the transmission side objective lens and the relay lens.

In the transmission type confocal laser microscope, adjustment of the illumination side objective lens for focussing is achieved by moving the specimen stage while the specimen is illuminated with the optical microscope unit which is similar to the prior art. The transmission side objective lens is adjusted for focussing as follows: The optical path from the transmission side objective lens to the concave mirror is switched to the target side. The specimen is illuminated with a light source for focus adjustment. Focussing on the target is achieved by adjusting the transmission side objective lens while observing the specimen through the optical microscope unit. Both objective lenses can be positioned in complete confocal points.

Since the transmission side objective lens comprises the movable objective lens unit and the stationary relay lens unit, focus adjustment is achieved by moving only the objective lens unit. Accordingly, the concave mirror, the optical path switch and the target which are in the rear of the relay lens can be incorporated in a stable fixed block.

### BRIEF DESCRIPTION OF THE DRAWINGS

Fig. 1 is a schematic view showing one embodiment of the present invention;
Fig. 2 is a schematic view showing a prior art; and
Fig. 3(A) and 3(B) are views for comparing the shifts of the objective lens units of prior art transmission type confocal laser microscopes with each other.

### DETAILED DESCRIPTION OF THE PREFERRED EMBODIMENT

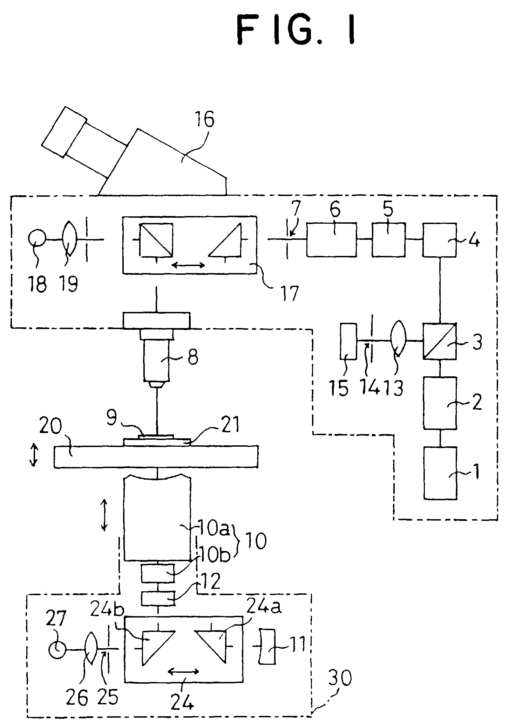

An embodiment of the present invention will now be explained with reference to Fig. 1. Like parts corresponding to those of the above-mentioned prior art are represented by like reference numerals throughout the drawings. Detailed description of like parts will be omitted.

The embodiment is identical with the prior art of Fig. 2 in structure of the optical system from the light source 1 for emitting polarized laser light to the specimen 9 and the optical microscope unit from the light source for vertical overhead illumination and the binocular head 17 to the specimen 9 excepting the feature which will be described hereinafter. Accordingly, description of them will be omitted.

In the embodiment, the transmission side objective lens 10 below the specimen stage 20 comprises a relay lens unit 10b, the position of which is fixed and an objective lens unit 10b which is incorporated in such a manner that it is movable relative to the relay lens 10b. The objective lens unit 10a comprises a lens having characteristics equal to those of an objective lens having an infinitive length and the objective lens unit comprises a lens having characteristics equal to those of an imaging lens similar to a telescopic objective lens. The performance of the optical system behind the relay lens unit 10b is not changed even if the spacing between the objective lens unit 10a and the relay lens unit 10b is changed.

An optical path switch 24 is provided in the rear of the 1/4λ wave length plate 12 in an optical path in the rear of the transmission side objective lens 10. The optical switch 24 comprises total reflective prisms 24a, 24b for changing the optical path in normal two directions. One total reflective prism 24a is adapted to bend the optical path toward the concave mirror 11 in a normal direction. The other total reflective prism 24b is adapted to bend the optical path toward a focus target 25.

The concave mirror 11 has a concave surface in a position where the laser light reflected from the prism 24a is imaged by the transmission side objective lens 10. The concave surface has a center which is located in the pupil position of the objective lens 10.

A target 25 comprises, for example, a circular ring and is positioned in an imaging position of the transmission side objective similarly to the reflective surface of the concave mirror 11. The target 25 is illuminated with a light source 27 via a relay lens 26. The components in the rear of the relay lens 26 are secured within a fixing block 30. The prisms 24a and 24b may be replaced with a rotatable single prism.

The thus formed laser microscope emits a polarized laser light from the light source 1 similarly to the conventional microscope as shown in Fig. 1. The emitted light is transmitted through the expander 2, the polarized beam splitter 3, the Galvano-mirrors 4,5, the relay lens 6 and the field and illumination side objective lens 8. The laser light is focused upon the specimen 9 as a spot and is scanned therealong. The light which has been transmitted through the specimen 9 is transmitted through the transmission side objective lens 10 and the light is bent by the reflective prism 24a and is reflected on the concave mirror 11. The reflected light is reversed along the same optical path to reach the polarized beam splitter 3. Only the reflected light is reflected and is bent in a normal direction and is transmitted through the condensing lens 13 and is detected by the specimen signal detecting sensor comprising photoreceiving elements.

Adjustment of illumination side objective lens for focussing is conducted by lowering and elevating the specimen platen 20 while observing through the binocular head 17, the specimen 9 which is illuminated by a vertical overhead illumination light source as shown in Fig. 1.

Adjustment of the transmission side objective lens 10 for focussing on the target 25 is conducted by switching the optical path switch 24 into the optical path on the side of the target 25, turning the light source on and moving only the objective lens unit 10a while viewing the binocular head 17 without using the light source 18.

After both objective lenses 8 and 10 have been adjusted, the upper optical path switch 17 is actuated to switch the optical path from the optical microscope unit to the laser light emitting side optical path and the lower switch 24 is actuated to switch the optical path into the side of the concave mirror 11. The above-mentioned observation with laser light is conducted.

Alternatively, adjustment of the illumination side objective lens 8 for focussing on the specimen may be conducted while illuminating with the light source in stead of the vertical overhead illumination light source 18.

In accordance with the present invention, the focussing target is positioned in a position which is optically equal to the concave mirror in an optical path behind the transmission side objective lens. Focussing adjustment is conducted while viewing through the optical microscope unit. Thus, adjustment of the transmission side objective lens for focussing can be achieved at ease, fast and higher accuracy.

The transmission side objective lens comprises the objective lens unit and the relay lens unit. Movement of only the objective lens unit will not change the optical path after the relay lens unit.

Components of the optical system including the relay lens unit, subsequent concave mirror and components existing up to the target can be incorporated within a common fixed block. Accordingly, a high precision transmission type confocal laser microscope in which the optical axes before and after the specimen stage are completely aligned with each other.

## Claims

1. A transmission type confocal microscope including a laser illumination means (1), a light receiving element (12), an illumination side objective lens (8) for condensing a laser spot light from said illumination means onto a specimen (9), a transmission side objective lens (10) optically equivalent to the illumination side objective lens (8), a concave mirror (11) located at a focal point of the transmission side objective lens (10), and means (4-6) for scanning said laser light onto said specimen (9), the arrangement being such that light transmitted by said specimen is focussed by said transmission side objective lens (10) onto said mirror (11), is reflected by said mirror and is returned along the same optical path to said photoreceiving element (12) characterised in that said microscope further includes an optical path switch means (24) arranged behind the transmission side objective lens for switching between a first optical path to said concave mirror (11)and a second optical path toward a target means arranged for illumination by a light source (27) for use in focussing the transmission side objective lens (10), said target means being located at the focal point of the transmission side objective lens (10).

2. A transmission type confocal laser microscope as claimed in claim 1 in which said transmission side objective lens (10) comprises an objective lens unit (10a) which is movable in a direction of an optical axis and a fixed relay lens unit (10b), and the arrangement is such that movement of the objective lens unit (10a) for focus adjustment will not cause the optical path after the relay lens unit (10b) to be changed.

3. A transmission type confocal laser microscopoe as claimed in claim 1 or 2 in which the optical path on which the transmission side objective lens (10a) and fixed relay lens (10b) are located is normal to the optical path on which the optical path switch (24), the concave mirror (11) and the target (25) are located.

4. A transmission type confocal laser microscope as claimed in one of claims 1 to 3 in which said optical path switch (24) comprises a pair of reflective prisms (24a,24b) which are movable with respect to the optical axis of the transmission side objective lens and the relay lens.

5. A transmission type confocal laser microscope as defined in one of claims 1 to 3 in which said optical path switch comprises a reflective mirror which is rotatable around the optical axis of the transmission side objective lens (10a) and the relay lens (10b).

## Patentansprüche

1. Konfokales Durchstrahlungsmikroskop, mit einer Laserbeleuchtungseinrichtung (1), einem Lichtempfangselement (12), einer beleuchtungsseitigen Objektivlinse (8), um einen Laserlichtfleck von der Beleuchtungseinrichtung auf einer Probe (9) zu konzentrieren, einer durchstrahlungsseitigen Objektivlinse (10), die zur beleuchtungsseitigen Objektivlinse (8) optisch äquivalent ist, einem konkaven Spiegel (11), der an einem Brennpunkt der durchstrahlungsseitigen Objektivlinse (10) angeordnet ist, und Einrichtungen (4-6), um das Laserlicht auf der Probe (9) abzutasten, wobei die Anordnung so ist, daß das durch die Probe übertragene Licht von der durchstrahlungsseitigen Objektivlinse (10) auf den Spiegel (11) fokussiert, von dem Spiegel reflektiert und auf dem gleichen optischen Weg zum Photoempfangselement (12) zurückgeleitet wird, dadurch gekennzeichnet, daß das Mikroskop außerdem eine Umschalteinrichtung (24) für den optischen Weg hat, die hinter der durchstrahlungsseitigen Objektivlinse angeordnet ist, um zwischen einem ersten optischen Weg zu dem konkaven Spiegel (11) und einem zweiten optischen Weg in Richtung auf eine Targeteinrichtung umzuschalten, die angeordnet ist, um zur Verwendung zum Fokussieren der durchstrahlungsseitigen Objektivlinse (10) von einer Lichtquelle (27) beleuchtet zu werden, wobei die Targeteinrichtung an dem Brennpunkt der durchstrahlungsseitigen Objektivlinse (10) angeordnet ist.

2. Konfokales Durchstrahlungslasermikroskop nach Anspruch 1, bei dem die durchstrahlungsseitige Objektivlinse (10) eine Objektivlinseneinheit (10a), die in Richtung einer optischen Achse verlagerbar ist, und eine feststehende Übertragungslinseneinheit (10b) aufweist, und die Anordnung so ist, daß die Verlagerung der Objektivlinseneinheit (10a) zur Brennpunkteinstellung keine Veränderung des optischen Weges hinter der Übertragungslinseneinheit (10b) bewirkt.

3. Konfokales Durchstrahlungslasermikroskop nach Anspruch 1 oder 2, bei dem der optische Weg, auf dem die durchstrahlungsseitige Objektivlinse (10a) und die feststehende Übertragungslinse (10b) angeordnet sind, senkrecht zu dem optischen Weg verläuft, auf dem der Umschalter (24) für den optischen Weg, der konkave Spiegel (11) und das Target (25) angeordnet sind.

4. Konfokales Durchstrahlungslasermikroskop nach einem der Ansprüche 1 bis 3, bei dem der Umschalter (24) für den optischen Weg ein Paar reflektierende Prismen (24a, 24b) enthält, die relativ zu der optischen Achse der durchstrahlungsseitigen Objektivlinse und der Übertragungslinse bewegbar sind.

5. Konfokales Durchstrahlungslasermikroskop nach einem der Ansprüche 1 bis 3, bei dem der Umschalter für den optischen Weg einen reflektierenden Spiegel enthält, der um die optische Achse der durchstrahlungsseitigen Objektivlinse (10a) und der Übertragungslinse (10b) drehbar ist.

## Revendications

1. Microscope à foyer commun du type à transmission comportant des moyens d'éclairage laser (1), un élément récepteur de lumière (12), un objectif du côté éclairage (8) pour concentrer un spot de lumière laser provenant desdits moyens d'éclairage sur un spécimen (9), un objectif côté transmission (10) équivalent au niveau optique à l'objectif du côté éclairage (8), un miroir concave (11) situé au niveau d'un point focal de l'objectif du côté transmission (10), et des moyens (4 à 6) pour balayer ladite lumière laser sur ledit spécimen (9), l'agencement étant tel que la lumière transmise par ledit spécimen est focalisée par ledit objectif du côté transmission (10) sur ledit miroir (11), est réfléchie par ledit miroir et renvoyée le long du même trajet optique vers ledit élément photo-récepteur (12), caractérisé en ce que ledit microscope comporte de plus des moyens de commutation de trajet optique (24) agencés derrière l'objectif du côté transmission pour commuter entre un premier trajet optique vers ledit miroir concave (11) et un second trajet optique vers des moyens cibles agencés pour un éclairage par une source de lumière (27) destinée à être utilisé pour focaliser l'objectif du côté transmission (10), lesdits moyens cibles étant situés au niveau du point focal de l'objectif du côté transmission (10).

2. Microscope laser à foyer commun du type à transmission selon la revendication 1, dans lequel ledit objectif du côté transmission (10) comporte une unité d'objectif (10a) qui est mobile dans la direction d'un axe optique et une unité de lentille de relais fixe (10b), et l'agencement est tel qu'un déplacement de l'unité d'objectif (10a) pour un ajustement de focalisation n'entraîne pas de modification du trajet optique après l'unité de lentille de relais (10b).

3. Microscope laser à foyer commun du type à transmission selon la revendication 1 ou 2, dans lequel le trajet optique sur lequel sont situés l'objectif du côté transmission (10a) et la lentille de relais fixe (10b), est perpendiculaire au trajet optique sur lequel sont situés le commutateur de trajet optique (24), le miroir concave (11) et la cible (25).

4. Microscope laser à foyer commun du type à transmission selon l'une quelconque des revendications 1 à 3, dans lequel ledit commutateur de trajet optique (24) comporte une paire de prismes réflecteurs (24a, 24b) qui sont mobiles par rapport à l'axe optique de l'objectif du côté transmission et de la lentille de relais.

5. Microscope laser à foyer commun du type à transmission selon l'une quelconque des revendications 1 à 3, dans lequel ledit commutateur de trajet optique comporte un miroir réflecteur qui est rotatif autour de l'axe optique de l'objectif du côté transmission (10a) et de la lentille de relais (10b).
